(19) **Europäisches Patentamt / European Patent Office / Office européen des brevets**

(11) **EP 1 427 595 B1**

(12) **EUROPEAN PATENT SPECIFICATION**

(45) Date of publication and mention of the grant of the patent:
**16.04.2008 Bulletin 2008/16**

(51) Int Cl.:
***B60C 15/024*** (2006.01)    ***B60B 21/02*** (2006.01)

(21) Application number: **01968861.3**

(22) Date of filing: **12.09.2001**

(86) International application number:
**PCT/US2001/028640**

(87) International publication number:
**WO 2003/022602 (20.03.2003 Gazette 2003/12)**

(54) **PNEUMATIC TIRE AND WHEEL ALLOWING UNASSISTED MANUAL MOUNTING OF THE TIRE AND A METHOD FOR DESIGNING SUCH A TIRE AND WHEEL**

LUFTREIFEN UND RAD FÜR DIE WERKZEUGLOSE MANUELLE MONTAGE DES REIFEN UND VERFAHREN ZUM ENTWERFEN EINES SOLCHEN LUFTREIFENS UND RADES

PNEUMATIQUE ET JANTE PERMETTANT UN MONTAGE MANUEL NON ASSISTE DU PNEUMATIQUE SUR LA JANTE ET PROCEDE DE CONCEPTION DE CE PNEUMATIQUE ET DE CETTE JANTE

(84) Designated Contracting States:
**AT BE CH CY DE DK ES FI FR GB GR IE IT LI LU MC NL PT SE TR**

(43) Date of publication of application:
**16.06.2004 Bulletin 2004/25**

(73) Proprietors:
- **Société de Technologie Michelin
  63000 Clermont-Ferrand Cedex 09 (FR)**
- **Michelin Recherche et Technique S.A.
  1763 Granges-Paccot (CH)**

(72) Inventors:
- **THOMPSON, Ronald, H.
  Greenville, SC 29615 (US)**
- **COTTRELL, Roger, C.
  Simpsonville, SC 29681 (US)**

(74) Representative: **Diernaz, Christian
  M. F. P. Michelin,
  SGD/LG/PI-F35-Ladoux
  63040 Clermont-Ferrand Cedex 09 (FR)**

(56) References cited:
**WO-A-00/26039**      **AU-B- 521 469**

**Description**

BACKGROUND AND SUMMARY OF THE INVENTION

The invention relates to tubeless pneumatic tires and wheels, and more specifically, to a wheel configured to allow hand mounting of a tubeless pneumatic tire on the wheel without the assistance of tools.

Tubeless pneumatic tire and wheel assemblies form a chamber that retains air without a separate air-holding tube. Tension of the tire beads on the wheel bead seats forms an air-tight seal. Internal air pressure acts axially outward to push the tire bead against the wheel rim flange. The rim flange, which extends radially outward from the bead seat, prevents the tire bead from coming off the wheel.

In mounting a pneumatic tire on a wheel, typically, one bead is entirely passed relatively easily over the rim flange. Mounting the other bead is assisted by the wheel well, which allows a portion of the bead to slip over the flange, but requires the application of force to move the remaining portion of the bead over the flange. This step requires tools and typically requires a machine because the tire bead must be deformed from a circular shape and stretched to pass over the rim flange.

The present invention is directed to a pneumatic tire and wheel having geometries specifically adapted to allow the tire to be mounted on the wheel by hand without the use of tools or machines.

More particularly, the present invention is directed to a wheel having a rim flange of a height and having a well with a depth relative to the rim flange height and at a location relative to the rim flange that permits a tire bead to pass over the rim flange with manually-generated forces.

According to the invention, for a tire having a bead seat circumference $C_t$, the wheel geometry is defined by:

$$C_t = \frac{1}{2}\pi D_w + 2\sqrt{\frac{1}{2}D_w^2 + D_w(G+H) + (G+H)^2 + (W+Y)^2} + M$$

where $D_w$ is the wheel well diameter, G is the depth of the wheel well measured from the wheel bead seat, W is a axial distance from the edge of the wheel well to the mounting side flange, H is the radial height of the rim flange above the wheel bead seat, Y is the axial width of the rim flange, and M represents a quantity of extra. length needed to enable hand-mounting, the units of measure being millimeters.

Preferably, the tire has beads that have an ovalization stiffness, that is the ability to resist being deformed from a circular shape to an oval shape, of not more than about 0.7 N/mm.

In addition, it may be necessary to modify the tire and/or the wheel to ensure an appropriate balance between the internal pressure of the tire and axial resistance force provided by the rim flange. A method for checking the relative forces could include the following steps. Once the rim flange height H is determined from the above relationship, the stress on the rim flange and the axially outward acting force generated by internal tire pressure may be approximately related by the following equations:

$$F = \pi P\left(\left(\frac{D_{eq}}{2}\right)^2 - \left(\frac{D_b}{2}\right)^2\right)$$

where, F is the axially outward acting force on the tire rim flange, $D_{eq}$ is the equilibrium diameter of the tire, $D_b$ is tire bead diameter, and P is the inflation pressure, and

$$F \approx \sigma \pi D_b H$$

where, σ is the stress on the tire rim flange and H is the height of the rim flange as determined from the wheel geometry equation.

To arrive at the appropriate balance of forces, the rim flange of the wheel could be reinforced to improve the handling of stresses. Alternatively, the tire could be modified, for example, the internal pressure specification P could be lowered, or the tire equilibrium diameter could be changed by reducing the aspect ratio of the tire, that is, using shorter sidewalls.

BRIEF DESCRIPTION OF THE DRAWINGS

The invention will be better understood by reference to the following Detailed Description in conjunction with the appended figures, in which:

Figure 1 is a side view illustrating a flexible ring being slipped over a rim flange of a wheel;

Figure 2 is view of the ring and wheel of Figure 1 with the wheel rotated 90° about its axis of rotation; and,

Figure 3 is a sectional view of a tire bead and rim illustrating schematically the forces at the bead seat and rim flange.

DETAILED DESCRIPTION

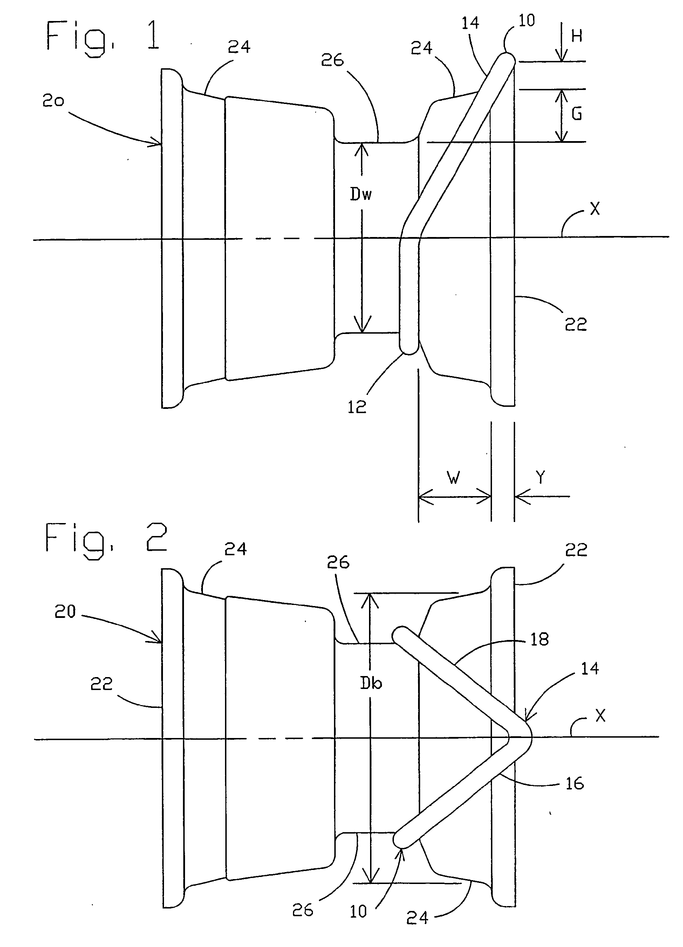

The invention relates to mounting tubeless, pneumatic tires onto wheels without the assistance of tools or machines. To illustrate the principles of the invention, Figure 1 shows a side view of a wheel 20 with a flexible ring 10 illustrated as if passing over the rim flange 22 onto the wheel, which approximates the path over which a tire bead follows when mounted on a wheel of the drop center or well type. The following description and the appended drawings are intended to describe and illustrate the principles of the invention by way of embodiments, and the invention should not be construed as being limited to the particular embodiments.

A tubeless, pneumatic tire mounted on a wheel, such as the wheel 20 in Figure 1, will sit with its beads on the bead seats 14 and abutting the rim flange 22. The bead of a tire (not illustrated in Figure 1) comprises a bead wire or cable, which engages the carcass plies, surrounded by various rubber products which perform different functions. The rubber product under the bead wire, that is, radially inward of the bead wire, is compressed against the bead seat when the tire is mounted to form an airtight seal. The tire bead is retained on the wheel by the opposing actions of the internal tire air pressure and the rim flange and the typically frusto-conical bead seat.

The rim flange 22 poses difficulties in mounting the tire because the tire bead, which is a smaller diameter than the rim flange 22, must be deformed and/or stretched to pass over the flange 22 on to the wheel 20. The wheel well 26 provides some assistance by shortening the path between the outer edge of the flange 24 and the wheel inner surface. Nonetheless, in conventional tubeless, pneumatic wheels, mounting a tire requires tools and/or a machine to perform the necessary deformation of the tire bead.

The inventors have discovered that by modeling the movement of the tire bead over the rim flange, the relationships among the various dimensions of the wheel to the bead diameter can be established such that a pneumatic, tubeless tire and wheel combination can be designed to permit hand mounting of the tire on the wheel. Figures 1 and 2 show a rim profile with dimensions of interest identified: the rim flange width Y, the axial distance from the rim flange to the wheel well W, the height H of the rim flange above the bead seat 24, the depth G of the wheel well relative the bead seat 24, the wheel well diameter $D_w$, and the bead seat diameter $D_b$. The axis of rotation X of the wheel is also shown. The point determining the bead seat diameter is the axial midpoint of the seat.

Fitting a tire bead over a rim flange 22 can be approximated, as represented in Figures 1 and 2, by a ring 10 having a semi-circular portion 12 positioned on the wheel well 26 with a triangular portion 14 deformed to stretch over the rim flange 22. Note that each of the legs 16, 18 of the triangular portion 14 extends radially outward from the wheel well 26 to a point on the outer edge of the rim flange 22 and axially outward on a plane including the axis of rotation X of the wheel. The length C of the ring 10 needed to form this shape (and accordingly fit over the rim flange) is approximated as the sum of the length of the semi-circular portion 12 (half the circumference of the wheel well 26) plus the total length 2L of the two legs 16, 18 of the triangular portion 14:

$$C = \frac{1}{2}\pi D_w + 2L$$

The length of each leg 16, 18 may be calculated by treating each leg as the hypotenuse of a triangle formed by the leg 16 or 18, the radius of the rim flange (½$D_w$ +G+H) (see Figure 1), and a projection of the leg 16, 18 onto the wheel axial plane. As an expression, the length L of a leg may be written as:

$$L = \sqrt{\left(\frac{1}{2}D_w + G + H\right)^2 + p^2}$$

where p is the length of the projection of the leg of the triangular portion 14.

The length of the projection p of the leg may be calculated by treating it as the hypotenuse of a triangle formed by the projection p, the radius of the wheel well ($\frac{1}{2}D_w$), and the axial distance W+Y from the outer edge of the rim flange 22 to wheel well 26, or:

$$p^2 = \left(\frac{1}{2}D_w\right)^2 + (W+Y)^2$$

Thus, the length of the two legs of the triangular portion 14 may be expressed as:

$$2L = 2\sqrt{\left(\frac{1}{2}D_w + G + H\right)^2 + \left(\frac{1}{2}D_w\right)^2 + (W+Y)^2}$$

which, after expanding the first term and collecting identical quantities, becomes:

$$2L = 2\sqrt{\frac{1}{2}D_w{}^2 + D_w(G+H) + (G+H)^2 + (W+Y)^2}$$

Summing the length of the semicircular portion 12 and the lengths of the two triangular portions produces an approximation of the minimum length of bead circumference needed to pass over the rim flange. However, this length would not necessarily produce a hand-mountable bead. The inventors have discovered that the tire bead circumference must be extended an additional length to enable hand-mounting of the tire. According to the invention, therefore, for a tire having a bead seat circumference $C_b$, the wheel geometry is defined by:

$$C_t = \frac{1}{2}\pi D_w + 2\sqrt{\frac{1}{2}D_w{}^2 + D_w(G+H) + (G+H)^2 + (W+Y)^2} + M$$

where the units of measure are millimeters and M represents a quantity of extra length needed to enable hand-mounting.

According to the invention, a preferred value of M to enable hand-mounting is 80 millimeters. The extra length M is related to the wheel diameter and the stiffness of the tire bead (explained in more detail below), and can range from 75 to 100 mm. Of course, the amount of length added to the tire bead circumference should not be so much that the tire fails to form a seal on the bead seat or does not remain seated on the rim.

Preferably, for hand mounting, the tire has beads having an ovalization stiffness, that is the ability to resist deforming under force from a circular shape to an oval shape, of not more than about 0.7 N/mm. Stiffer beads would not be readily deformable by hand for passing over the rim flange.

The amount of additional length M may be affected by the ovalization stiffness of the tire bead and a more easily deformable bead could require less than 80 mm additional length, while a less easily deformable bead may require more than 80 mm.

The equation for the length of the bead circumference suggests that a deeper wheel well and/or a lower rim flange height produces a wheel on which a tire is more readily hand-mountable. Of course, there are practical limits on the depth of the wheel well, so not to interfere with the necessary wheel mounting hub diameter, and on the rim flange height, to ensure that the tire is retained on the rim.

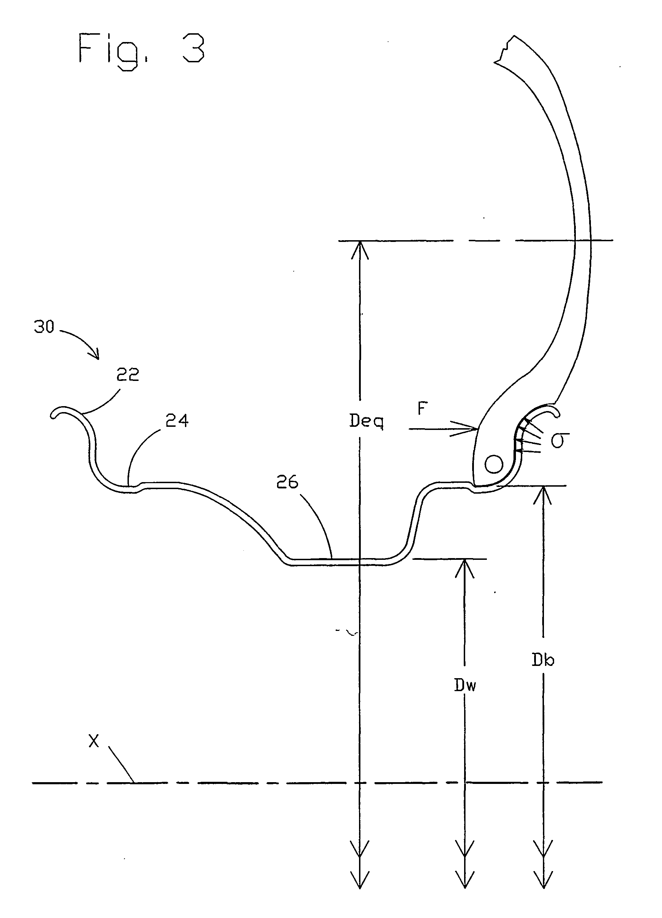

To ensure that the tire rim can withstand the internal pressure force of the tire, it may be necessary to modify the tire and/or the wheel rim. Those skilled in the art will understand that the internal air pressure exerts an axial expanding force on the tire that may be represented as a resultant force F acting on the rim flange 22, which is illustrated in Figure 3. The rim flange 22 supplies an opposite force, which may be expressed as the sum of the stresses σ over the flange height H. Once the rim flange height H is determined from the above wheel geometry equation, the stress on the rim flange and the axially outward acting force generated by internal tire pressure may be related by the following equations:

$$F = \pi P \left( \left( \frac{D_{eq}}{2} \right)^2 - \left( \frac{D_b}{2} \right)^2 \right)$$

where, $D_{eq}$ is the equilibrium diameter of the tire, $D_b$ is tire bead diameter, and P is the inflation pressure of the tire, and

$$F \approx \sigma \pi D_b H$$

where, $\sigma$ is the stress on the tire rim flange and H is the height of the rim flange as determined from the geometry equation, above.

These relationships are illustrated in Figure 3.

To arrive at the appropriate relationship, the tire rim could be reinforced to provide greater stress resistance. Alternatively, or in addition, the tire could be modified, for example, the internal pressure specification P for small vehicle tires could be lowered, or the tire equilibrium diameter could be changed by reducing the aspect ratio of the tire.

Using these tools, the tire designer can specify the geometry of a tire and wheel to obtain a tire and wheel in which the tire is mountable by hand on the wheel. The term "hand-mount" means that a person of average strength is able to work the tire bead over the rim flange without the assistance of tools.

The invention has been described in terms of preferred principles and embodiments, however, those skilled in the art will understand how to make substitution and use equivalents that will not depart from the scope of the invention as defined in the appended claims.

## Claims

1.  Wheel (20) for a pneumatic, tubeless tire of bead seat circumference Ct, the wheel (20) comprising a rim having a flange (22) of height H and width Y, and a well (26) having a depth G, a well floor diameter Dw, a well floor circumference Cw, and a well position W relative to the flange (22) on a mounting side of the wheel (20), the wheel being **characterised in that** it satisfies the relationship :

$$C_t = 0.5C_w + 2\sqrt{0.5D_w{}^2 + \left(0.5D_w + G + H\right)^2 + \left(W + Y\right)^2} + M$$

where M has a value in a range of approximately 75 to 100 mm, which has the effect of making the tire mountable on the wheel (20) by hand without tools.

2.  Pneumatic tire and wheel assembly comprising:

    - a tire having a bead with a bead seat circumference of $C_t$ ; and,
    - a wheel (20) having a rim with a flange (22) of height H and width Y, and a well (26) having a depth G, a well floor diameter $D_w$ a well floor circumference $C_w$, and a well position W relative to the flange (22) on a mounting side of the wheel,

    the tire and wheel assembly being **characterised in that** the relationship :

$$C_t = 0.5C_w + 2\sqrt{0.5D_w{}^2 + \left(0.5D_w + G + H\right)^2 + \left(W + Y\right)^2} + M$$

is satisfied for values M of at least 80 mm, which has the effect of making the tire mountable on the wheel (20) by hand without tools.

3. Assembly according to claim 2, wherein M is not more than about 100 mm.

4. Assembly according to claims 2 or 3, wherein the tire bead has an ovalization stiffness of not more than 0.7 N/mm.

**Patentansprüche**

1. Rad (20) für einen schlauchlosen Luftreifen mit einem Felgenschulterumfang $C_t$, wobei das Rad (20) eine Felge mit einem Horn (22) mit einer Höhe H und einer Breite Y und ein Felgenbett (26) mit einer Tiefe G, einem Felgenbettbodendurchmesser $D_w$, einem Felgenbettbodenumfang $C_w$ und einer Felgenbettposition W bezüglich des Horns (22) auf einer Montageseite des Rads (20) umfasst, **dadurch gekennzeichnet, dass** es die folgende Beziehung erfüllt:

$$C_t = 0.5C_w + 2\sqrt{0.5D_w^2 + (0.5D_w + G + H)^2 + (W + Y)^2} + M$$

wobei M ein Wert in einem Bereich von ca. 75 bis 100 mm ist, der bewirkt, dass der Reifen von Hand ohne Werkzeuge auf dem Rad (20) montierbar ist.

2. Luftreifen- und Radeinheit, die Folgendes umfasst:

   - einen Reifen mit einem Wulst, der einen Wulstsitzumfang von $C_t$ aufweist; und
   - ein Rad (20) mit einer Felge, die ein Horn (22) mit einer Höhe H und einer Breite Y aufweist, und einem Felgenbett (26) mit einer Tiefe G, einem Felgenbettbodendurchmesser $D_w$, einem Felgenbettbodenumfang $C_w$ und einer Felgenbettposition W bezüglich des Horns (22) auf einer Montageseite des Rads,

   **dadurch gekennzeichnet, dass** die Beziehung:

$$C_t = 0.5C_w + 2\sqrt{0.5D_w^2 + (0.5D_w + G + H)^2 + (W + Y)^2} + M$$

für Werte M von mindestens 80 mm erfüllt ist, was bewirkt, daß der Reifen von Hand ohne Werkzeuge auf dem Rad (20) montierbar ist.

3. Anordnung nach Anspruch 2, wobei M nicht mehr als 100 mm beträgt.

4. Anordnung nach Anspruch 2 oder 3, wobei der Reifenwulst eine Beständigkeit gegen Unrundwerden von nicht mehr als 0,7 N/mm aufweist.

**Revendications**

1. Roue (20) pour bandage pneumatique sans chambre à air dont la circonférence de siège de bourrelet est $C_t$, la roue (20) comprenant une jante qui présente un rebord (22) de hauteur H et de largeur Y et un creux (26) qui présente une profondeur G, un diamètre de fond de creux $D_w$, une circonférence de fond de creux $C_w$ et une position de creux W par rapport au rebord (22) sur un côté de montage de la roue (20), la roue étant **caractérisée en ce qu'**elle satisfait la relation :

$$C_t = 0.5C_w + 2\sqrt{0.5D_w{}^2 + (0.5D_w + G + H)^2 + (W + Y)^2} + M$$

où M présente une valeur comprise dans la plage d'approximativement 75 à 100 mm, ce qui a pour effet que le bandage peut être monté sur la roue (20) manuellement sans outils.

2. Ensemble de bandage pneumatique et de roue comprenant :

- un bandage qui présente un bourrelet dont la circonférence de siège est $C_t$ et
- une roue (20) qui présente une jante avec un rebord (22) de hauteur H et de largeur Y et un creux (26) qui présente une profondeur G, un diamètre de fond de creux $D_w$, une circonférence de fond de creux $C_w$ et une position de creux W par rapport au rebord (22) sur un côté de montage de la roue,

l'ensemble de bandage et de roue étant **caractérisé en ce que** la relation :

$$C_t = 0.5C_w + 2\sqrt{0.5D_w{}^2 + (0.5D_w + G + H)^2 + (W + Y)^2} + M$$

est satisfaite pour des valeurs de M supérieures à 80 mm, ce qui a pour effet que le bandage peut être monté sur la roue (20) manuellement sans outils.

3. Ensemble selon la revendication 2, dans lequel M est inférieur ou égal à environ 100 mm.

4. Ensemble selon les revendications 2 ou 3, dans lequel le bourrelet de bandage présente une rigidité à l'ovalisation inférieure ou égale à 0,7 N/mm.

Fig. 1

Fig. 2

# Fig. 3